# EUROPÄISCHE PATENTANMELDUNG

(11) **EP 1 006 684 A2**
(43) Veröffentlichungstag der Anmeldung: **07.06.2000**
(21) Anmeldenummer: 99250413.4
(22) Anmeldetag: 23.11.1999
(51) Int. Cl.: H04H 1/00, H04Q 7/22, G08G 1/09

(54) **Verfahren zum Übertragen von Tabelleninformationen von einer Zentrale an ein Endgarät über einen Übertragungskanal und Zentrale zum Durchführen des Verfahrens**

(30) Priorität: 04.12.1998 DE 19857782
(71) Anmelder: MANNESMANN Aktiengesellschaft, 40213 Düsseldorf (DE)
(72) Erfinder: Möhlenkamp, Klaus, Dipl.-Ing., 40545 Düsseldorf (DE); Wichura, Torsten, Dipl.-Ing., 40547 Düsseldorf (DE)
(74) Vertreter: Meissner, Peter E., Dipl.-Ing.

(57) **Zusammenfassung**

Bei der Übertragung von Informationen, insbesondere Verkehrsinformationen von einer Zentrale an ein Endgerät wird der Umfang von im Endgerät zu speichernden Tabelleninformationen zur Dekodierung von codiert über einen Übertragungskanal übertragenen Informationen optimiert durch eine Zentrale und ein Verfahren zum Übertragen von Tabelleninformationen (10, 10a, 11) von einer Zentrale (7) an ein Endgerät (6) über einen Übertragungskanal (12),
über welchen Übertragungskanal (12) auch Nutzinformationen (8, 9) codiert von der Zentrale (7) ("A", "E") an das Endgerät (6) übertragen werden,
wobei die Tabelleninformationen (10,11) im Endgerät (6) verwendbar sind zur Dekodierung (17) der zentralseitig mit Tabelleninformationen (10,11) codierten und derart codiert ("A", "E") an das Endgerät (6) übertragenen (12) Nutzinformationen (9a, 16; 8, 9),
wobei zur Übertragung (12) von Tabelleninformationen (10,11) von der Zentrale (7) an das Endgerät (6) über den Übertragungskanal (12) mit Nutzinformationen (8,9) unbelegte Lücken (10) verwendet werden.

## Beschreibung

Die Erfindung betrifft ein Verfahren zum Übertragen von Tabelleninformationen von einer Zentrale an ein Endgerät über einen Übertragungskanal und eine Zentrale zum Durchführen des Verfahrens.

Zur Realisierung eines Informationssystems, insbesondere Verkehrsinformationssystems, mit einer Informationen (insbesondere Verkehrsinformationen) über einen Übertragungskanal an ein Endgerät aussendenden Zentrale (insbesondere Verkehrsinformationszentrale) soll in der Zentrale eine Kodiertabelle mit Tabelleninformationen zum redundanzoptimierten Kodieren zu übertragender Nutzinformationen und im Endgerät eine Dekodiertabelle mit Tabelleninformationen zum Dekodieren der kodiert empfangenen Nutzinformationen vorgesehen werden.

Dem Fachmann bekannt ist die Übermittlung von Verkehrsinformationen über RDS/TMC, in welchem System im Endgerät Dekodiertabellen mit Meldungstexten und zugeordneten Ereignis-Codes für Ereignisse (wie beispielsweise Stau) sowie Dekodiertabellen mit Ortsinformationen (insbesondere Straßensegmente) und zugeodneten Orts-Codes verwendet werden.

Aufgabe der vorliegenden Erfindung ist die Schaffung eines Verfahrens bzw. einer Vorrichtung zum endgerätseitigen Einbringen von Tabelleninformationen, insbesondere Verkehrsinformationen, welches bzw. welche den Umfang der im Endgerät zu speichernden Tabelleninformationen bei guter Aktualisierbarkeit der Tabelleninformationen minimiert. Die Aufgabe wird durch das Verfahren in dem unabhängigen Anspruch 1 und durch die Anordnung in dem unabhängigen Anspruch 16 gelöst.

Die Erfindung erlaubt die Ausbildung von Endgeräten mit relativ geringem Speicherumfang, da die für ein Endgerät relevanten Tabelleninformationen über den Übertragungskanal in Lücken (= sich ergebende oder reservierte freie Kapazitäten) zwischen Nutzinformationen übertragen werden. Das Endgerät ist an beliebigen Orten einsetzbar, da jeweils die erforderlichen Tabelleninformationen für die vor Ort relevanten Verkehrsinformationen eingebracht werden können. Überdies können die Tabelleninformationen im Endgerät auch einfach und schnell laufend aktualisiert werden. Das Verfahren bzw. die Zentrale arbeitet dabei ohne einen Rückkanal zur Anforderung von für das Endgerät relevanten Informationen, so daß das Verfahren alleine über Broadcast-Medien (= an mehr als einen Empfänger sendende Medien) effizient realisierbar ist.

Der Übertragungskanal kann insbesondere ein Mobilfunkkanal sein. Die Informationen können dabei insbesondere alphanumerisch über einen Kurznachrichtenkanal übertragen werden. Besonders geeignet ist ein Mobilfunk-Broadcast-Kanal, wie beispielsweise der GSM-SMS-CB-Kanal.

Die mit Nutzinformationen unbelegten Lücken bei der Übertragung über den Übertragungskanal können Zeit- und/oder Frequenz- und/oder Code-Lücken in Abhängigkeit vom verwendeten Übertragungskanal sein.

Die Lücken können zyklische, vorgegebene Lücken sein. Dies können beispielsweise zyklisch gesendete Kurznachrichten-Seiten oder Teile von Kurznachrichten-Seiten sein.

Nach einer anderen Ausgestaltung der Erfindung sind die Lücken variable Lücken, die sich jeweils im Einzelfall ergeben, wenn keine Nutzinformationen zu übertragen sind.

Im Falle zyklisch vorhandener variabler Lücken können diese beispielsweise jeweils nach einer vorgegebenen Anzahl zu sendender Pakete von Nutzinformationen auftreten, beispielsweise in jeder n-ten (z.B. dritten) Cellbroadcast-Seite (z.B. GSM-CB-SMS-Seite). Auch ist beispielsweise eine zyklische Übertragung in Zeitintervallen von z.B. ein bis zehn, insbesondere drei Minuten möglich.
Die Erfindung bezieht sich insbesondere auf Nutzinformationen in Form von Verkehrsinformationen (wie Staumeldungen, Reisezeitenmeldungen, Durchschnittsgeschwindigkeiten-Meldungen), welche von einer Zentrale in Form einer Verkehrsinformationszentrale ausgesendet werden.

Die übertragenen Tabelleninformationen können (beispielsweise bei Verkehrsinformationen) insbesondere Ortsinformationen enthalten, wobei beispielsweise jeweils mindestens einem Orts-Code (der übertragen wird) jeweils mindestens ein Ort (z.B. der im Endgerät auszugebende Name des Ortes) zugeordnet sein kann. Alternativ oder zusätzlich können die übertragenen Tabelleninformationen auch Ereignis-Informationen enthalten; im Falle von Nutzinformationen in Form von Verkehrsinformationen können die Ereignisinformationen in den Tabelleninformationen beispielsweise Angaben über Staus, mittlere Reisezeiten, mittlere Geschwindigkeiten, Geisterfahrer etc. sein. Zur Übertragung einer auf Ereignisse bezogenen Tabelleninformation wird jeweils für eine Art von Ereignissen der Ereigniscode und die zugeordnete (insbesondere die am Endgerät auszugebende) Ereignisinformation übertragen (beispielsweise "D, Stau"). Zur Übertragung einer sich auf ein Ereignis beziehenden Nutzinformation kann auch z.B. nur der Ereignis-Code übertragen werden (hier D), worauf das Endgerät aus seinen Ereignis-Tabelleninformationen zugeordnete Ereignisinformationen, insbesondere auszugebende Texte ermitteln kann. Sowohl Tabelleninformationen als auch Nutzinformationen können also auf Orte und/oder Ereignisse bezogene Informationen beinhalten.

Hinsichtlich der Vorrichtung ist das Verfahren in einer Zentrale, insbesondere Verkehrsinformationszentrale, ausbildbar mit einer Sendeeinrichtung zum Senden von Nutzinformationen und Tabelleninformationen über einen Übertragungskanal, mit einer Kodiereinrichtung, mit einem Nutzinformationsspeicher und mit einem Code-Informationsspeicher versehen, wobei die Sendeeinrichtung so ausgebildet ist, daß Tabelleninformationen von der Zentrale an das Endgerät über den Übertragungskanal in mit Nutzinformationen unbelegten Lücken gesendet werden.

Die Einbringung der Tabelleninformationen in mit Nutzinformationen unbelegten Lücken kann in Abhängigkeit vom Übertragungskanal in zeitlichen Lücken, Code-Lücken oder andere Lücken erfolgen durch geeignete Multiplexer für Nutzinformationen und Tabelleninformationen.

Tabelleninformationen können auch nur die innerhalb eines örtlichen Bereichs, beispielsweise eines Bereichs um eine Mobilfunkzelle, über die von der Zentrale übertragen wird, relevanten Tabelleninformationen sein.

Weitere Merkmale und Vorteile der Erfindung ergeben sich aus der nachfolgenden Beschreibung eines Ausführungsbeispiels anhand der Zeichnung. Dabei zeigt.
- Fig. 1: als Blockschaltbild die Übertragung von Tabelleninformationen von einer Zentrale an ein Endgerät und
- Fig. 2: ein Beispiel einer Einfügung von Tabelleninformationen in eine Lücke zwischen zu übertragenden Nutzinformationen.

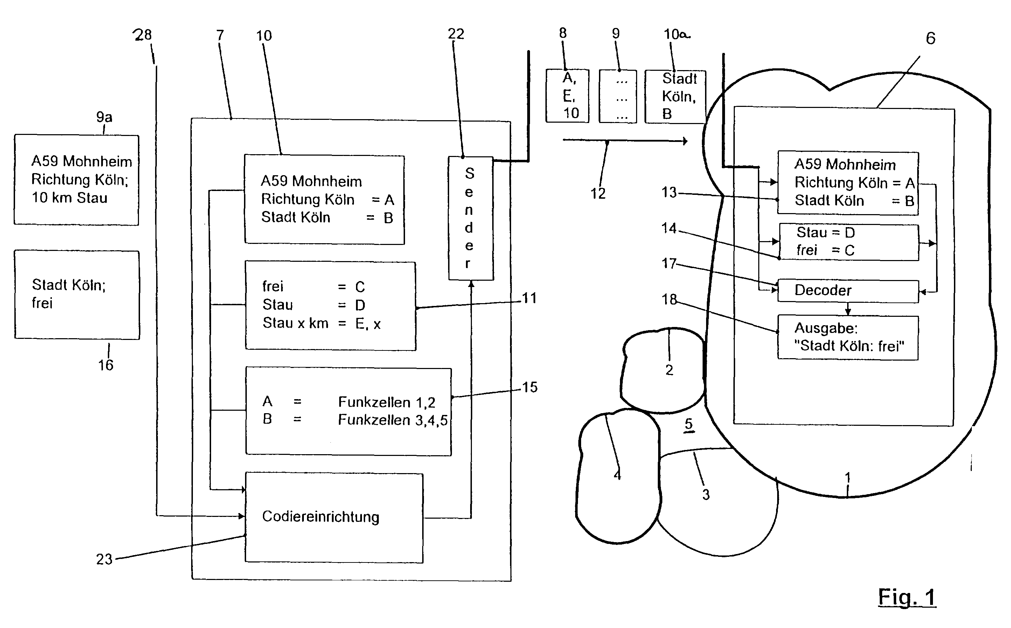

Figur 1 zeigt auszugsweise fünf Funkzellen 1 bis 5 eines Mobilfunknetzes. In der Funkzelle 1 befindet sich ein Endgerät 6 (hier ein Mobilfunkendgerät) zum Empfang von einer Zentrale 7 ausgesendeten Informationen 8, 9, 10.

Die Zentrale 7 sendet in unterschiedliche Funkzellen, hier in Gruppen von Funkzellen, unterschiedliche Informationen (Nutzinformationen und/oder Tabelleninformationen). So sendet sie in die Funkzelle 1, in welcher sich das Endgerät 6 befindet, die Nutzinformationen 8 und 9 sowie die Tabelleninformationen 10a. Die gleichen Informationen wie in die Zelle 1 werden auch in die Funkzelle 2 gesendet. In die Funkzellen 3, 4, 5 werden andere Informationen als in die Funkzellen 1, 2 gesendet. Welche Informationen jeweils in eine Funkzelle gesendet werden, hängt davon ab, welche Informationen regional in den Funkzellen bedeutsam sind. Die gesendeten Nutzinformationen (und/oder Tabelleninformationen) können insbesondere sich auf den Straßenverkehr beziehende Informationen, also Verkehrsinformationen, sein. Insbesondere in diesem Falle sind jeweils in eine Funkzelle Informationen zu senden, welche für sie örtlich und/oder zeitlich von Bedeutung sind, beispielsweise Staumeldungen in einer Umgebung von 30 km um eine Funkzelle etc.

In der Zentrale 7 gehen aus unterschiedlichen Quellen 28 Nutzdaten, hier Verkehrsdaten, ein. Nutzdaten können die Zentrale 7 bereits in fertiger zu versendender Form erreichen oder noch in der Zentrale 7 überarbeitet werden. Im Falle von Nutzinformationen in Form von Verkehrsinformationen können die Quellen 8 insbesondere im Verkehr mitfahrende Fahrzeuge (FCD) und/oder stationäre Detektoren und/oder andere Quellen, wie Meldebehörden, sein.

In der Zentrale 7 liegen nach Eingang oder Aufbereitung die Nutzinformationen (hier Verkehrsinformationen) in Form von Daten vor, welche zumindest einen Ort und eine Art eines Ereignisses an diesem betreffen, beispielsweise eine Autobahnnummer und die Länge eines Staus darauf. Die Nutzinformationen können jedoch auch anstatt zweidimensional (Ort + Ereignis) nur eindimensional oder mehr als zweidimensional sein.

Zur optimalen Nutzung des Übertragungskanals sollen die Nutzinformationen codiert übertragen werden. Hierfür liegen für die (hier zweidimensionalen) Nutzinformationen Kodiertabellen vor für Orte und Ereignisse. Es können auch für weniger oder mehr als zwei Arten von Nutzinformations-Bestandteilen Tabellen vorliegen.

Im vorliegenden Fall ist die Nutzinformation 9a die Information "A59 Monheim, Richtung Köln; 10 km Stau".

Die Tabelle mit Tabelleninformationen 10 bezüglich der Orte umfaßt hier (neben einer Vielzahl weiterer Orte) die Orte "A59 Monheim Richtung Köln" mit dem zugeordneten Code "A" sowie den Ort "Stadt Köln" mit dem zugeordneten Code "B".

Ferner sind hier in einer Tabelle Tabelleninformationen 11 bezüglich bestimmter Ereignisse abgelegt. So ist für freie Fahrt, also "frei" der Code "C", für "Stau" der Code "D" und für "Stau x km" der Code "E , x" vorgesehen.

In den Tabelleninformationen 10, 11 sind also jeweils zu einer möglichen Nutzinformation (hinsichtlich eines Ortes bzw. Ereignisses) Codes A bis E vorgesehen, welche eine komprimierte Übertragung dieser Nutzinformationen über den Übertragungskanal 12 erlauben. Im Endgerät 6 werden die in Form von Codes A bis E (evtl. mit zusätzlichen Zahlenangaben) übertragenen Nutzinformationen wiederum mit Tabellen (13,14) decodiert. Hierzu sind im Endgerät Tabelleninformationen 13 für Orte und Tabelleninformationen 14 für Ereignisse vorgesehen. Beispielsweise können, wie im vorliegenden Falle, mit der Tabelle 13 für Orte aus dem übertragenen Code "A" wieder der Text "A59 Monheim Richtung Köln" sowie mit der Tabelle 14 aus dem übertragenen Code "E, 10" die Information "10 km Stau" aus Tabelle 14 gewonnen werden, sobald die Tabelleninformation"E,x = Stau x km" im Endgerät eingebracht ist.

Die Erfindung sieht nun zur Optimierung der Nutzung des Übertragungskanals 12 vor, daß in mit Nutzinformationen (A, E) unbelegten Lücken über den Übertragungskanal 12 ferner Tabelleninformationen 10a von der Zentrale 7 an das Endgerät 6 übertragen werden. Dies hat den Vorteil, daß im Endgerät 6 ein nur kleiner Speicher für Tabelleninformationen erforderlich ist und daß Tabelleninformationen schnell, laufend und nur soweit örtlich relevant eingebracht werden können. Dabei können beispielsweise für Verkehrsinformationen nur Tabelleninformationen zu Orten (10, 13), nur Tabelleninformationen zu Ereignissen (11, 14) oder Tabelleninformationen zu Orten und Ereignissen übertragen werden. Insbesondere wenn die Tabelleninformationen zu Orten sehr umfangreich sind, kann es sinnvoll sein, nur Tabelleninformationen zu Orten von der Zentrale über den Übertragungskanal an das Endgerät 6 zu übertragen.

Um in der Zentrale 7 festzustellen, in welche örtlichen Bereiche (hier in welche Gruppen von Funkzellen 1, 2; 3, 4, 5) welche Verkehrsinformationen zu übertragen sind, ist eine weitere Tabelle 15 in der Zentrale vorgesehen, in welcher zu Gruppen von möglichen Orten (hier "A", "B" usw.) angegeben ist, in welche Funkzellen diese zu übertragen sind (hier in die Funkzellen 1, 2 oder die Funkzellen 3, 4, 5). Die Funkzellen können dabei in Form von Location-Codes angegeben sein. Die Auswahlinformationen (hier Ortsinformationen A, B) in der Tabelle 15 können in unterschiedlicher Form angegeben sein, beispielsweise in Form von vollständigen Texten, wie in der Meldung 9a, in Form von daraus gewonnenen Orts-Codes "A", "B" usw. anhand der Tabelle 10 etc. Allgemein ausgedrückt umfaßt die Tabelle 15 Auswahlkriterien zur Auswahl von Sendebereichen (hier Funkzellen eines Mobilfunknetzes) anhand der zu sendenden Informationen.

Im vorliegenden Fall wird entschieden, daß die Nutzinformationen 9 aufgrund der Zuordnung in der Tabelle 10 zum Bereich "A" und aufgrund der Zuordnung der Tabelle 15 des Bereichs "A" zu den Funkzellen 1, 2 in den Funkzellen 1, 2 zu senden ist. Im vorliegenden Fall empfängt also das Endgerät 6 die Informationen, weil es sich derzeit in der Funkzelle 1 befindet. In die Funkzelle 2 werden die gleichen Informationen wie in die Funkzelle 1 übertragen. Hingegen werden andere Informationen ("B"-bezogene Informationen 16) in die Funkzellen 3, 4 und 5 gesandt. Die Sendung erfolgt als Mobilfunk-Kurznachrichten-Cellbroadcast-Sendung und ist in unterschiedlichen Funkzellen oder Gruppen von Funkzellen 1, 2; 3 bis 5 unterschiedlich.

Die Übertragung der Tabelleninformationen 10, 11 von der Zentrale 7 überden Übertragungskanal 12 in einen Speicher 13, 14 des Endgerätes 6 erfolgt in von Nutzinformationen unbelegten Lücken, also zeitlichen Lücken, Code-Lücken etc. Lücken sind dabei Zeiten, freie Codes etc. auf dem Übertragungskanal 12, welche aktuell nicht für Nutzinformationen verwendet werden. Dabei können Lücken im Einzelfall verwendet werden, wenn aktuell keine Nutzinformationen zu senden sind. Alternativ können Lücken zyklisch vorgesehen sein, beispielsweise alle 1 bis 10 Minuten, insbesondere alle drei Minuten oder in jeder n-ten (z. B. jeder dritten) Kurznachrichtenseite eines Mobilfunknetzes etc. Die von der Zentrale 7 über den Übertragungskanal 12 an das Endgerät gesandten Tabelleninformationen 10 werden im Endgerät in Abhängigkeit davon, ob es sich um Nutzinformationen oder Tabelleninformationen handelt (was beispielsweise in einem Header in den Tabelleninformationen 10 angegeben sein kann) in einen Speicher für Tabelleninformationen 13, 14 für Orte (13) oder Ereignisse (14) geleitet und dort gespeichert. Wenn hingegen im Endgerät eine Nutzinformation 10a eingeht, wird sie im Endgerät zu einer Dekodiereinrichtung 17 geleitet, welche auf die Speicher mit Tabelleninformationen 13 und/oder 14 zugreift. Von der Dekodiereinrichtung 17, werden dekodierte Nutzinformationen in eine Ausgabeeinrichtung 18 weitergeleitet, wo sie ausgegeben werden oder für eine spätere Ausgabe gespeichert werden.

Die Sendeeinrichtung der Zentrale 7 ist in Figur 1 als Block 22 dargestellt und kann einen Sender (im einfachsten Fall ein Mobilfunkgerät) oder einen Zugang zu einem Sender enthalten, Insbesondere kann sie ein Sender oder Zugang zu einem Sender für Mobilfunk beinhalten, über welchen (beispielsweise in Form von Kurznachrichten) alphanumerisch gesendet werden kann. Die Kodiereinrichtung ist in Figur 1 als Block 23 dargestellt, welcher eingehende Verkehrsinformationen 9a, 16 anhand von Tabelleninformationen 10, 11 in der Zentrale und anhand der Orts-/Funkzellentabelle 15 jeweils denjenigen Funkzellen zuordnet, in welchen die Informationen gesendet werden sollen. Nach Auswahl der Funkzellen für zu sendende und codierte Informationen werden diese von der Kodiereinrichtung 23 an die Sendeeinrichtung 22 übermittelt.

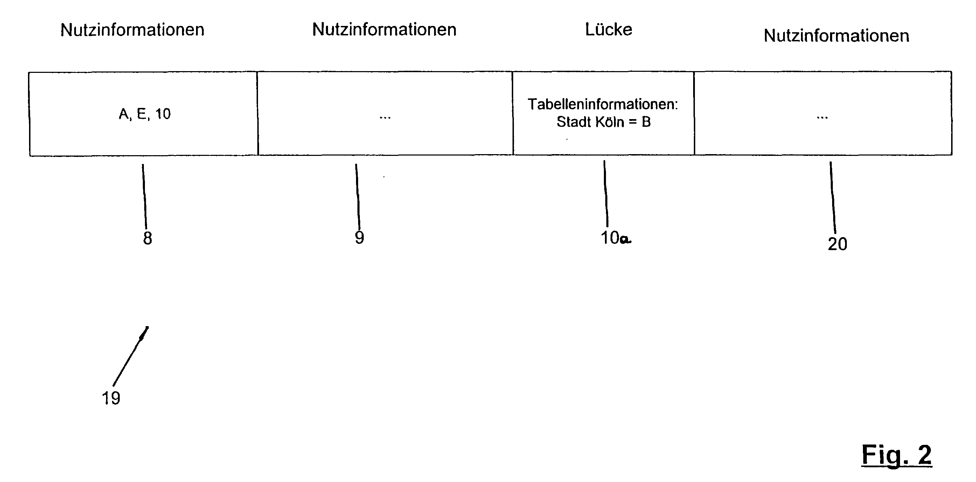

Figur 2 zeigt anhand eines Mobilfunk-Cellbroadcast-Kurznachrichten-Blocks 19 die Einfügung von Tabelleninformationen in eine Lücke zwischen Nutzinformationen. Im vorliegenden GSM-SMS-CB-Block 19 sind Informationsblöcke 8, 9, 20 mit Nutzinformationen und ein Block 10 mit Tabelleninformationen vorgesehen. Im vorliegenden Falle wird also eine aktuell freie Lücke in Form von freiem Platz in einer Kurznachrichtenseite zur Einfügung von Tabelleninformationen 10a verwendet.

## Patentansprüche

1. Verfahren zum Übertragen von Tabelleninformationen (10, 10a, 11) von einer Zentrale (7) an ein Endgerät (6) über einen Übertragungskanal (12),
über welchen Übertragungskanal (12) auch Nutzinformationen (8, 9) codiert von der Zentrale (7) ("A", "E") an das Endgerät (6) übertragen werden,
wobei die Tabelleninformationen (10, 11) im Endgerät (6) verwendbar sind zur Dekodierung (17) der zentralseitig mit Tabelleninformationen (10, 11) codierten und derart codiert ("A", "E") an das Endgerät (6) übertragenen (12) Nutzinformationen (9a, 16; 8, 9),
wobei zur Übertragung (12) von Tabelleninformationen (10, 11) von der Zentrale (7) an das Endgerät (6) über den Übertragungskanal (12) mit Nutzinformationen (8,9) unbelegte Lücken (10a) verwendet werden.

2. Verfahren nach Anspruch 1,
dadurch gekennzeichnet,
daß der Übertragungskanal (12) ein Mobilfunkkanal ist.

3. Verfahren nach einem der vorhergehenden Ansprüche,
dadurch gekennzeichnet,
daß der Übertragungskanal (12) ein an alle Teilnehmer in einem vorgegebenen örtlichen Bereich sendender alphanumerischer Kanal ist.

4. Verfahren nach einem der vorhergehenden Ansprüche,
dadurch gekennzeichnet,
daß der Übertragungskanal (12) ein Mobilfunk-Kurznachrichten-Cellbroadcast-Kanal, insbesondere GSM-SMS-CB-Kanal, ist.

5. Verfahren nach einem der vorhergehenden Ansprüche,
dadurch gekennzeichnet,
daß das Übertragungsverfahren auf dem Übertragungskanal (12) Lücken im Zeitbereich und/oder Frequenzbereich und/oder Code-Bereich in Form von Zeitslots, Frequenzslots oder Code-Slots zwischen Nutzinformationen zur Übertragung von Tabelleninformationen verwendet.

6. Verfahren nach einem der vorhergehenden Ansprüche,
dadurch gekennzeichnet,
daß die Lücken variable Lücken sind, die sich jeweils für einen Zeitpunkt aus der Nicht-Belegung mit Nutzinformationen ergeben.

7. Verfahren nach einem der Ansprüche, 1 bis 5,
dadurch gekennzeichnet,
daß die Lücken vorgegebene zyklische Lücken in mindestens einem zyklisch zu sendenden Informationsblock (19) sind.

8. Verfahren nach einem der Ansprüche 1 bis 5 oder 7,
dadurch gekennzeichnet,
daß die Lücken eine Kurznachrichtenseite oder ein Teil einer Kurznachrichtenseite sind.

9. Verfahren nach einem der Ansprüche 1 bis 5 oder 7 bis 8,
dadurch gekennzeichnet,
daß die Lücken bei zyklisch zu sendenden Paketen (8,9,10) jeweils nach einer vorgegebenen Anzahl von Paketen (8,9) in Form eines Paketes oder Teil eines Paketes (10) vorgesehen sind.

10. Verfahren nach einem der Ansprüche 1 bis 5 oder 7 bis 8,
dadurch gekennzeichnet,
daß die Lücken nach bestimmten Zeitintervallen, insbesondere alle 1 bis 10, insbesondere alle drei Minuten vorgesehen sind.

11. Verfahren nach einem der vorhergehenden Ansprüche
dadurch gekennzeichnet,
daß die Nutzinformationen Verkehrsinformationen sind.

12. Verfahren nach einem der vorhergehenden Ansprüche,
dadurch gekennzeichnet,
daß in der Zentrale (7) für bestimmte Ortsbereiche, insbesondere Funkzellen oder Gruppen von Funkzellen (23, 15) relevante Informationen(8,9,10a) jeweils nur an eine Funkzelle oder eine Gruppe von Funkzellen (1,2; 3 bis 5) gesendet werden und/oder nur soweit sie zeitlich relevant sind, ausgesendet werden.

13. Verfahren nach einem der vorhergehenden Ansprüche,
dadurch gekennzeichnet,
daß die Tabelleninformationen (10) Ortsinformationen ("A59 Monheim Richtung Köln") und zugeordnete, zu übertragende Codes ("A") umfassen.

14. Verfahren nach einem der vorhergehenden Ansprüche,
dadurch gekennzeichnet,
daß die Informationen durch ein Empfangsgerät empfangen werden, daß dieses Empfangsgerät eine Speichervorrichtung zum Speichern der Tabelleninformation aufweist und daß bei nichtvorhandener oder ungültiger Tabelleninformation diese Tabelleninformation über den Übertragungskanal empfangen und gespeichert wird.

15. Verfahren nach einem der vorhergehenden Ansprüche,
dadurch gekennzeichnet,
daß die Tabelleninformationen (11) Ereignisse ("frei", "Stau") und jeweils einem Ereignis zugeordnete zu übertragende Codes ("C", "D") enthalten.

16. Zentrale, insbesondere Verkehrsinformationszentrale zur Durchführung des Verfahrens nach einem der vorhergehenden Ansprüche,
- mit einer Sendeeinrichtung (22) zum Senden von Nutzinformationen (8) und Tabelleninformationen (10) über einen Übertragungskanal (12),
- mit einer Kodiereinrichtung (23) zum Kodieren von mit der Sendeeinrichtung (22) über den Übertragungskanal (12) zu sendenden Nutzinformationen (9a, 16) unter Verwendung von in der Zentrale vorliegenden Tabelleninformationen (10,11),
- mit einem Nutzinformationsspeicher (9a, 16) für zu sendende Nutzinformationen,
- mit einem Tabelleninformationsspeicher für zu sendende und/oder für zum Kodieren von zu sendenden Nutzinformationen zu verwendende Tabelleninformationen (10,11),
- wobei die Kodiereinrichtung (23) und/oder die Sendeeinrichtung (22) so ausgebildet ist, daß zum Übertragen von Tabelleninformationen (10,11) von der Zentrale (7) an das Endgerät (6) über den Übertragungskanal (12) mit Nutzinformationen (8,9) unbelegte Lücken (10a) verwendet werden.

17. Zentrale nach Anspruch 16,
dadurch gekennzeichnet,
daß die Sendeeinrichtung der Zentrale einen Zeitmultiplexer aufweist, der so ausgebildet ist, daß Tabelleninformationen in zeitlichen Lücken zwischen Nutzinformationen gesendet werden.

18. Zentrale nach Anspruch 16 oder 17,
dadurch gekennzeichnet,
daß die Sendeeinrichtung einen Codemultiplexer aufweist, der so ausgebildet ist, daß Tabelleninformationen (10,11) in Code-Lücken zwischen Nutzinformationen gesendet werden.

19. Zentrale nach einem der Ansprüche 16 bis 18,
dadurch gekennzeichnet,
daß die Sendeeinrichtung so ausgebildet ist, daß Tabelleninformationen innerhalb eines zu übertragenden Datenpaketes, insbesondere innerhalb einer auch mit Nutzinformationen belegten Mobilfunk-Kurznachrichtenseite, übertragen werden.

20. Zentrale nach einem der Ansprüche 16 bis 18,
dadurch gekennzeichnet,
daß die Sendeeinrichtung der Zentrale so ausgebildet ist, daß Tabelleninformationen in einer eigenen Mobilfunk-Kurznachrichtenseite, insbesondere zyklisch, übertragen werden.

21. Zentrale nach einem der Ansprüche 16 bis 20,
dadurch gekennzeichnet,
daß die Zentrale eine der Sendeeinrichtung (22) vorgeschaltete Kodiereinrichtung (23) zum Auswählen oder Priorisieren von für ein Sendegebiet (Mobilfunkzellen 1, 3; 3 bis 5) örtlich relevanten Tabelleninformationen (10,11) aufweist.

22. Zentrale nach einem der Ansprüche 16 bis 21,
dadurch gekennzeichnet,
daß sie eine Auswahleinrichtung (23) zum Auswählen oder Priorisieren von zeitlich aktuellen Tabelleninformationen aufweist.

23. Zentrale nach einem der Ansprüche 16 bis 22,
dadurch gekennzeichnet,
daß die Sendeeinrichtung zum Senden über einen Mobilfunk-Kurznachrichten-Cellbroadcast-Kanal ausgebildet ist.

24. Zentrale nach einem der Ansprüche 16 bis 22,
dadurch gekennzeichnet,
daß der Übertragungskanal ein Verkehrsradiokanal oder RDS- oder DAB- oder Pager- oder Internet-Kanal ist.
